# EUROPEAN PATENT SPECIFICATION

(11) **EP 3 932 638 B1**
(45) Date of publication and mention of the grant of the patent: **22.11.2023**
(21) Application number: 21180095.8
(22) Date of filing: 17.06.2021
(51) Int. Cl.: B28D 1/18, E04F 21/24, E04G 23/02, B24B 7/18, B24B 7/30

(54) **METHOD FOR MANUFACTURING A FLOOR SYSTEM**
VERFAHREN ZUR HERSTELLUNG EINES BODENSYSTEMS
PROCÉDÉ DE FABRICATION D'UN SYSTÈME DE PLANCHER

(30) Priority: 30.06.2020 BE 202005485
(43) Date of publication of application: 05.01.2022
(73) Proprietor: ROCASYSTEMS, 8830 Hooglede (BE)
(72) Inventor: ROELENS, Ignace Michel Stefaan, 8830 Hooglede (BE); ROELENS, Gert-Jan Aurel Firmin, 8830 Hooglede (BE)
(74) Representative: IP HILLS NV

(56) References cited:
- EP-A1- 2 035 193
- EP-A1- 2 992 998
- EP-B1- 2 035 193
- EP-B1- 3 247 535
- DE-U1-202006 003 609

## Description

### Technical field

The present invention relates to milling, more specifically surface milling and to milling equipment, both suitable for levelling floor surfaces, to methods for levelling floor surfaces, and to floor systems comprising said levelled floor surfaces.

### Prior art

House building is timeless. On the one hand, fewer new buildings are being built, and there is a trend towards renovating existing buildings.

On the other hand, the building requirements are more stringent, since houses are required to have better and better thermal insulation.

This often poses problems in providing a suitable floor structure. Old floors without insulation are removed and must be replaced with new floor systems with insulation values that must satisfy strict(er) requirements. However, insufficient height is available for providing sufficient insulation. Either the floor level should be increased, which often is not possible or desirable, or floor systems should be provided that have a smaller thickness. One solution is to omit the screed layer and replace it with insulation that has a closer surface tolerance, making it possible to provide a point load spreader. This is one possibility, but the surface tolerance of these load-bearing insulation layers is not perfect. The height tolerance of such layers, for example sprayed polyurethane layers, is far from sufficient. Moreover, post-treatment of such layers with an abrading motion (making use of industrial surface grinding equipment), and removal of the grinding residues by suction, also gives insufficiently close height tolerances, for example such as making use of equipment such as described in EP2992998A1. Insufficiently close height tolerances mean that point load spreaders, for example self-supporting floor heating systems or cement fibreboards, are not usable. This is because they are rigid boards or objects and they must be placed on a flat surface so that they are supported over the entire area of this surface, for example a layer of insulation. A typical floor system comprising a floor heating layer is shown in DE202006003609U. This floor system comprises an insulation layer, on which a load distribution layer is provided. On this load distribution layer, a floor heating layer comprising heat conductors is provided, on which an upper external floor covering is provided.

### Summary of the invention

One aim of the invention is to find a solution for these problems. The invention has shown, surprisingly, that milling, rather than grinding, of the load-bearing insulating materials might well give sufficiently close tolerance, especially if special surface milling cutters are used. Another aim of the invention is to provide a milling apparatus that is able to mill a floor surface in a suitable manner and within the required tolerances.

According to a first aspect of the invention, a method is provided for manufacturing a floor system, the method comprising the steps:
- providing a supporting structure;
- optionally applying utility lines on this supporting structure;
- applying a layer of foamed polymer-containing material applied on the supporting structure and if applicable the utility lines in order to obtain a floor surface;
- levelling the floor surface by means of a milling apparatus comprising at least one milling cutter;
- optionally applying a layer of rigid, flat boards on the levelled side of the layer of foamed polymer-containing material;
- applying a floor heating layer provided with heat conductors supported by the levelled side of the layer of foamed polymer-containing material, or if applicable by the layer of rigid, flat boards;
- applying an upper external floor covering placed on the floor heating layer.

The rigid, flat boards that are optionally to be applied may have integrated channels for fitting floor heating hoses. These floor heating hoses may be hydraulic hoses or may be electric floor heating wires.

Foamed polymer-containing material is material that comprises foamed polymer, or optionally even consists of foamed polymer. The foamed polymer-containing material may be foamed and sprayed-on polymer material (for example foamed and sprayed-on polyurethane), or may for example be an EPS mortar. The latter is a mortar that comprises foamed polystyrene (PS) or "expanded polystyrene" (EPS) in a matrix of mortar. These materials are typically acoustic and/or thermal insulating materials.

When levelling the floor surface with a milling cutter, the floor surface is milled. The material that is milled away is preferably led away via an extraction system that is coupled to the milling apparatus. Thus, according to some embodiments, the milling apparatus may comprise a suction system for discharge of milled-off material, so that the method further comprises the removal of milled-off material via the suction system.

The application of a layer of foamed polymer-containing material may comprise spraying-on of the layer of foamed polymer material, preferably foamed and sprayed-on polyurethane foam.

According to some embodiments, the at least one milling cutter may be a surface milling cutter.

Optionally, instead or additionally when applying a layer of rigid, flat boards on the levelled side of the layer of foamed polymer-containing material, a layer of liquid screed is applied, for example a relatively thin layer of liquid screed. This liquid screed may be applied on the rigid flat boards, or on a specially designed grid with an open structure, which allows the screed to flow freely. Possibly a floor heating system is incorporated in the flat rigid boards.

According to some embodiments, application of a layer of foamed polymer-containing material may comprise spraying-on of the layer of foamed polymer material, preferably foamed polyurethane foam.

This layer of foamed polymer-containing material, such as foamed polyurethane or EPS mortars or other semi-hard insulation layers, may be applied with a thickness of between 3 and 24 cm. The height differences over said layer are too great for laying a rigid flat body or a floor heating layer thereon. Therefore 5 to 15 mm of foamed polymer-containing material is milled off during a levelling treatment according to one aspect of the present invention, so that the surface tolerances necessary for stable application of a rigid flat body or a floor heating layer may be met. The need to apply a covering floor or screed may thus be limited or avoided. The thickness that this covering floor or screed would require may be taken up partly or completely with insulation. Owing to the insulation layer being milled perfectly flat, the margin that is taken for the irregularities of the substrate to determine the thickness of for example a liquid screed that is to be applied may be omitted from the thickness calculation. Thus, a thinner layer of liquid screed may optionally be used, which still satisfies the applicable standards.

The advantage of the methods according to the invention is among other things that in renovation work, floors can be produced that require a limited thickness of screed or are even screed-free. This screed normally takes up a considerable thickness of the floor that is applied on the heat-insulating layer. As a result, the thickness of the complete floor is sometimes extremely thick. During renovation, possibly insufficient space will remain for providing an effective, sufficiently thick thermal insulation layer. The method can thus provide a floor system in renovation work, where otherwise insufficient height is available for placement of the known floor systems. This can avoid having to break up an existing floor slab because not enough space is available, where after breaking up and excavating, a new floor slab has to be cast that is located 10 centimetres lower. The method according to the invention avoids such work, which is constructionally superfluous.

Attempts have been made to level the layers of foamed polymer-containing material by abrading with surface sanding equipment, after which vacuuming away of the abraded material was necessary. However, these abraded layers could not, surprisingly, meet the surface tolerances that are necessary for working with a reduced thickness of screed, or screed-free.

The method of course comprises in consequence also operating the milling cutter in order to mill and thus level the floor surface. The milling cutter is therefore provided with a drive mechanism, preferably a high-torque or spindle motor, which is driven by mains current or current from a battery, or current from a generator.

According to some embodiments, the milling cutter may be a surface milling cutter. The milling cutter may be a milling cutter that pushes the milled-off material inwards into the milling cutter, where the milled material may be withdrawn by a suction system that is mounted centrally with the milling cutter and discharges the material via an opening that is central in the milling cutter. The milling cutter may be a milling cutter that pushes the milled-off material outwards away from the milling cutter, where the milled-away or milled-off material can be withdrawn by a suction system that comprises a cover or hood within which the milling cutter operates. The milled-off material is drawn past the outside of the milling cutter into the cover or hood and led away.

According to some embodiments, the milling cutter may be a milling cutter according to the fourth aspect of the invention.

According to some embodiments, the milling cutter may form part of a milling apparatus according to the second or third aspect of the invention.

Any extractor system may be used for extraction. A suction pressure between -0.28 and -0.36 bar is to be selected. The air flow rate is preferably greater than 300 m³/h. These pressures are pressures expressed in bar below the prevailing atmospheric pressure.

According to some embodiments, a milling apparatus is used. The milling apparatus may be an apparatus that is able to operate automatically, and thus autonomously, i.e. essentially without the intervention of an operator. The milling apparatus may comprise a chassis with a multi-axis robot with a multi-axis robot arm mounted thereon. The at least one milling cutter is coupled to one end of the robot arm and can be moved by moving the multi-axis robot arms or moving the chassis. The method further comprises the step of moving the milling cutter relative to the floor surface to be milled, on the basis of movement of one or more axes of the multi-axis robot arm and/or the chassis. Preferably at least 3 or more axes must be available on the multi-axis robot arm.

The milling cutter, for example the surface milling cutter, which is fastened to the multi-axis robot arm, is moved by the movements of the robot arm relative to the floor surface to be milled, so that pieces of the floor surface can be milled off and set to height. By moving vertically, the robot arm can adjust the depth of milling, and by moving forwards and backwards and left and right, determine which partial surface of the floor surface is milled off. The perimeter of the partial surface that can be milled off is determined by the possibilities for movement and the size of the robot arm. More axes are to be selected for the robot arm if more complex floor surfaces with many obstacles are to be levelled. Arms with more than 3 axes may optionally move the milling cutter behind or between obstacles, which are not accessible with an arm with 3 or fewer axes. Robot arms with fewer axes, for example three or less, can be used for levelling simple floor surfaces. Fewer axes simplifies a uniform, cyclic robot movement, and lowers the risk of positioning errors of the milling cutter.

Thus, according to some embodiments, the milling apparatus may comprise a multi-axis robot with a multi-axis robot arm, the at least one milling cutter is coupled to one end of the robot arm and can be moved by moving the multi-axis robot arm. The method then further comprises the step of moving the at least one milling cutter relative to the floor surface to be milled, on the basis of movement of one or more axes of the multi-axis robot arm.

Preferably speeds are used that are less than or equal to 2 metres per minute in the direction of movement of the milling apparatus, and less than or equal to 15 metres per minute in the transverse direction thereto. Preferably an area of 30 to 170 m²/h is levelled, for example 50 to 170 m²/h, depending on inter alia the hardness of the material to be levelled and the power and rotary speed of the milling machine motor.

According to some embodiments, the milling apparatus may comprise a movable chassis, the at least one milling cutter, for example the at least one surface milling cutter, is fastened to and can be moved by the chassis, if applicable the milling cutter is fastened to the chassis by means of the multi-axis robot. The method may then further comprise the step of moving the milling cutter relative to the floor surface to be milled, on the basis of movement of the chassis.

Thus, according to some embodiments, the milling apparatus may comprise a movable chassis, the at least one milling cutter being fastened to and movable, for example by moving the chassis in an X and Y direction. The X direction is for example the direction of travel of the chassis, the Y-direction is the direction perpendicular to the X direction and coplanar with the surface to be milled. The Z direction is then vertical relative to the surface to be milled. If applicable, the milling cutter is fastened to the chassis by means of the multi-axis robot. The method then further comprises the step of moving the milling cutter relative to the floor surface to be milled, on the basis of movement of the chassis.

According to some embodiments, the chassis may comprise two or more caterpillar tracks for being propelled on the floor surface, the method comprising the milling of a number of tracks, equal to the number of caterpillar tracks, and positioning of the milling apparatus with the caterpillar tracks in these milled tracks for starting the milling of the rest of the floor surface. The caterpillar tracks have the advantage that the weight of the milling apparatus is distributed uniformly over a relatively large area. This limits the risk of crushing the layer of foam on which the milling apparatus is moving.

According to some embodiments, the chassis comprises at least three wheels, said wheels each being rotatable in two directions. The three wheels are preferably distributed uniformly round the chassis. The axes of the wheels thus preferably make an angle of 120° with one another. Each wheel comprises a central, substantially cylindrical body that is rotatable about its axis. On the outer side of this substantially cylindrical body there are at least three smaller cylinders, each of which has an axis, said axis being oriented perpendicular to both the axis of the substantially cylindrical body and to the radius of the substantially cylindrical body. These smaller cylinders are preferably dimensioned and positioned in such a way that always at least one of the small cylinders is in contact with the surface on which the wheel is positioned. The three smaller cylinders are preferably distributed uniformly round the wheel. The axes of the smaller cylinders thus preferably make an angle of 120° with one another. These smaller cylinders are rotatable about their axis. In consequence, each wheel may be propelled in a direction of travel perpendicular to the axis of the substantially cylindrical body through rotation of the substantially cylindrical body about its axis, and in the axial direction of the substantially cylindrical body through rotation of the cylinders. "Small cylinders" means that the axial length of the cylinders is preferably less than the diameter of the wheel to which the cylinder is coupled. The wheels may thus be Omni wheels or Mecanum wheels, or in general bidirectional wheels.

As an alternative, the milling apparatus comprises a self-levelling chassis. Thus, a chassis that levels itself automatically. The self-levelling chassis may be movable in the X and Y direction (which together form a horizontal plane) for example by means of 3 or more bidirectional wheels such as Omni wheels or Mecanum wheels. By means of a linear guide that is able to move at least in the Z-direction (the vertical direction) and which carries the milling cutter, the floor surface can be milled off to the desired height.

According to some embodiments, the chassis may have a length and a width, wherein the length of the chassis is modifiable, the method comprising the occasional modifying of the length of the chassis during milling of the floor surface.

According to some embodiments, the chassis may have a length and a width, wherein the width of the chassis is modifiable, the method comprising the occasional modifying of the width of the chassis during milling of the floor surface.

This enlargement of the chassis surface mainly has advantages when using the milling apparatus. By making the chassis larger in width, the load-supporting area of the milling apparatus increases, and the milling movements may thus be effected more stably. Making the chassis narrower is advantageous if the milling apparatus has to pass through narrower openings, for example narrow(er) door openings and the like.

According to some embodiments, the milling apparatus may comprise a chassis and a rotation system, the rotation system comprising at least one supporting surface and a lifting system in order to bring the at least one supporting surface into contact with the underlying floor surface and to lift up the chassis further away from the underlying floor surface, wherein the rotation system further allows the chassis to rotate about an axis perpendicular to the at least one supporting surface, the method comprising the step of raising the chassis away from the floor surface and modifying the orientation of the chassis by rotating the chassis relative to the lifting system.

According to some embodiments, the milling apparatus may comprise a chassis and a rotation system, the rotation system comprising at least one supporting surface and a lifting system in order to bring the at least one supporting surface into contact with the underlying floor surface and to lift up the chassis further away from the underlying floor surface, wherein the rotation system further allows the chassis to rotate about an axis perpendicular to the at least one supporting surface, the method comprising the step of raising the chassis away from the floor surface and modifying the orientation of the chassis by rotating the chassis relative to the lifting system.

Where the robot arm, more specifically the possibilities for movement and the size of the robot arm determines which partial surface of the floor surface to be milled could be milled off, the movable, for example wheeled, chassis can ensure that the milling cutter, optionally with the robot arm, can move over the floor surface, and thus varying partial surfaces of the floor surface may be milled off. Through the movement of the robot arm and the chassis, almost the whole floor surface can be levelled by milling. It should be pointed out that the movement of the robot arm and the movement of the chassis may be carried out simultaneously.

According to some embodiments, the milling apparatus may comprise an environment scanner, preferably a LiDAR, for scanning at least the floor surface to be milled; the method comprises the step of scanning at least the floor surface to be milled, and locating objects that hinder milling.

Based on the scan of the floor surface, and optionally more extensively the whole space of which the floor surface forms a part, it is possible to determine how the arm and the chassis move best over the surface in order to mill-off the whole surface. Preferably the milling cutter will be positioned at a certain milling depth relative to a faying surface, for example a laser plane. Preferably this faying surface is horizontal or oriented at a preset angle of inclination. A faying surface at a preset angle of inclination may be used for inclined milling, so that a stepless transition may be formed between two levels. Based on its position determined with the LiDAR and measurement and/or calculation of the milling position and depth, the milling position in the vertical direction can be adapted to the desired height setting, being the height difference between the milled and thus levelled floor surface at the level of the milling cutter, and the faying surface. Optionally, reference points detectable by the LiDAR are applied in the room, for example on the walls of the room of which the floor surface forms a part. Optionally, the milling apparatus may allow the desired height setting of the milling cutter to depend on the position of the milling cutter relative to these reference points. Thus, instead of a levelling height at a constant distance from the faying surface, a levelling height may be realized that depends on the position of the reference points. Thus, desired height differences may be obtained over the levelled surface, for example steplessly, or the actual height of the levelled surface may vary in steps or gradually as desired, for example to give the levelled surface the desired inclination or slope, for example towards a water discharge point in said levelled floor surface.

According to some embodiments, the method may further comprise the step of calculating a sequence of movements of the chassis and/or robot arm in order to mill off and level the floor surface completely.

According to some embodiments, the milling apparatus may comprise a multi-axis robot with a multi-axis robot arm, the at least one milling cutter is coupled to one end of the robot arm and can be moved by moving the multi-axis robot arm, the milling apparatus further comprises a movable chassis, the at least one milling cutter is fastened to and can be moved by the chassis, if applicable the milling cutter is fastened to the chassis by means of the multi-axis robot, the method further comprises the step of calculating a sequence of movements of the chassis and/or robot arm in order to mill off and level the floor surface completely.

According to some embodiments, the milling apparatus may comprise an element generating a laser plane, separate from the chassis, and a laser detector for detecting this laser plane that is fastened to the chassis, the method further comprises the step of calculating the height of the milling cutter also by determining the height of the laser detector relative to the laser plane, and optionally adjusting the height of the milling cutter relative to the defined height of the laser detector relative to the laser plane.

According to some embodiments, the milling apparatus may comprise a movable chassis, the at least one milling cutter is fastened to and can be moved by the chassis, the milling apparatus comprises an element generating a laser plane, separate from the chassis. The milling apparatus further comprises a laser detector for detecting this laser plane that is fastened to the chassis, the method further comprises the step of calculating the height of the milling cutter also by determining the height of the laser detector relative to the laser plane, and optionally adjusting the height of the milling cutter relative to the defined height of the laser detector relative to the laser plane.

According to some embodiments, the floor surface may be a floor surface of an underground floor, a ground floor or a storey of a building comprising one or more non-ground-floor storeys.

The floor surface may be a floor surface of a building under construction, or of a building being renovated.

According to some embodiments, the floor surface may be a roof surface.

According to some embodiments, the floor surface may be manufactured from thermal and/or acoustic insulating material.

According to some embodiments, the floor surface may be manufactured from insulating mortar, for example EPS mortar.

According to some embodiments, the floor surface may be manufactured from foamed polymer material.

According to some embodiments, the floor surface may be manufactured from sprayed-on foamed polymer material.

Preferably this sprayed-on foamed polymer material is thermally and/or acoustically insulating.

According to some embodiments, the floor surface may be manufactured from sprayed-on polyurethane foam.

According to some embodiments the thickness of the material to be milled-off may be at least 1 mm.

According to some embodiments the height tolerance of the levelled floor surface may be less than 1.5 mm per 2 running metres of floor surface. These tolerances are, surprisingly, readily achieved by milling the floor surface, whereas they are not achievable by sanding the floor surface.

This milling of the floor surface in order to level said floor surface, in particular by means of the milling cutter and/or a milling apparatus according to the other aspects of the present invention, makes it possible for a person skilled in the art to manufacture floor systems that are more cost-effective and are less liable to possible errors on account of deviation from the permitted tolerance.

According to a second aspect of the invention, a milling apparatus is provided that is suitable for levelling a floor surface. The milling apparatus is an apparatus that operates automatically, and thus may operate autonomously, i.e. essentially without the intervention of an operator. The apparatus may comprise a chassis, to which at least one milling cutter, for example a surface milling cutter, is fastened.

According to some embodiments, the milling apparatus may comprise a multi-axis robot with a multi-axis robot arm, the at least one milling cutter is coupled to one end of the robot arm and can be moved by moving the multi-axis robot arm.

The robot arm may comprise for example 2, 3, 4, 5, 6 or even more than 6 axes. Preferably the number of axes is at least 3, for example between 3 and 6, inclusive. Between the axes, before the first axis and after the last axis, there is in each case a section or part of the robot arm. The milling cutter and the motor driving the milling cutter are fastened to the end of the last section of the robot arm.

According to some embodiments, the at least one milling cutter is a surface milling cutter.

According to some embodiments, the milling apparatus may comprise a movable chassis, wherein the at least one milling cutter is fastened to and can be moved by the chassis.

According to some embodiments, the milling apparatus may comprise a movable chassis, wherein the multi-axis robot is mounted on the movable chassis.

A movable chassis is preferably a wheeled chassis with a drive for moving the chassis.

According to some embodiments, the chassis may comprise two or more caterpillar tracks for being propelled on the floor surface.

These caterpillar tracks distribute the weight of the milling apparatus over a larger area than in the case of an alternative, being three or more wheels. The caterpillar tracks may optionally rotate at different speeds, in order to alter the direction of movement of the chassis and the milling apparatus. In an alternative embodiment, the caterpillar tracks may move synchronously. The chassis may comprise an alternative system for changing the direction of movement of the chassis and the milling apparatus, as will be explained hereunder. In embodiments wherein the chassis comprises three or more wheels for advancing the milling apparatus, one or more wheels may be configured as swivelling, and it may be possible to monitor and control this swivelling motion. This is for changing the direction of movement of the chassis and the milling apparatus.

In the case of caterpillar tracks, the area of the caterpillar track that comes in contact with the floor surface is so great that the pressure per area is less than 2000 kPa/m², more preferably less than or equal to 1000 kPa/m². The caterpillar tracks preferably have a width of 50 to 200 mm.

According to some embodiments, the chassis comprises at least three wheels, said wheels each being rotatable in two directions. The three wheels are preferably distributed uniformly round the chassis. The axes of the wheels thus preferably make an angle of 120° with one another. Each wheel comprises a central, substantially cylindrical body that is rotatable about its axis. On the outer side of this substantially cylindrical body there are at least three smaller cylinders, each of which has an axis, said axis being oriented perpendicular to both the axis of the substantially cylindrical body and to the radius of the substantially cylindrical body. These smaller cylinders are preferably dimensioned and positioned in such a way that always at least one of the small cylinders is in contact with the surface on which the wheel is positioned. The three smaller cylinders are preferably distributed uniformly round the wheel. The axes of the smaller cylinders thus preferably make an angle of 120° with one another. These smaller cylinders are rotatable about their axis. In consequence, each wheel may be propelled in a direction of travel perpendicular to the axis of the substantially cylindrical body through rotation of the substantially cylindrical body about its axis, and in the axial direction of the substantially cylindrical body through rotation of the cylinders. "Small cylinders" means that the axial length of the cylinders is preferably less than the diameter of the wheel to which the cylinder is coupled. The wheels may be bidirectional wheels, such as Omni wheels or Mecanum wheels.

As an alternative, the milling apparatus comprises a self-levelling chassis. Thus, a chassis that levels itself automatically. The self-levelling chassis may be movable in the X and Y direction (which together form a horizontal plane) for example by means of 3 or more directional wheels such as Omni wheels or Mecanum wheels. By means of a linear guide that can move at least in the Z-direction (the vertical direction) and that carries the milling cutter, the floor surface can be milled off to the desired height.

According to some embodiments, the chassis may have a length and a width, and wherein the length of the chassis is modifiable.

The longitudinal direction of the chassis is parallel to the intended direction of movement of the milling apparatus. The width is the direction perpendicular thereto.

The chassis can for example change in the longitudinal direction by using telescopic tubes or by making use of a spindle and an associated linear guide, and wherein the spindle is rotatable by means of a spindle motor. This enlargement of the chassis surface mainly has advantages in the case when caterpillar tracks are used for moving the chassis forwards. Preferably the distance between the conical wheels of the caterpillar track increases with the increase in chassis length. There is thus an increase in the area of the caterpillar track with which the chassis is carried on the floor surface. Therefore the load per unit area of caterpillar track can be reduced and the carrying area of the chassis is greater, so that the milling movements can be performed more stably and the milling cutter speed may possibly be increased. The simultaneous increase in wheel base will also increase the stability of the milling apparatus and allow quicker milling and movement.

In the case of caterpillar tracks, the caterpillar tracks may be provided with a system for automatically tensioning the caterpillar tracks with changing length of the chassis. The chassis that can be increased in length comprises a telescopically expanding unit that has a fixed part, connected firmly to the chassis, and a moving part that can move, extending in and out, relative to the fixed part. A hinged first arm is fastened to the movable part and can hinge about an axis at the level of a first end of the arm close to the movable part. In this hinged arm, a guide slot is provided, in which a guide pin can move, said guide pin being fixed on the fixed part. On sliding out of the moving part, owing to the movement of the guide pin in the guide slot the arm will be hinged downwards towards the fixed part. On the upper side of the arm, away from the hinge point, a second arm is mounted, which can rotate up and down round the end of the first arm. At this rotation point, a motion-inducing element, for example a torsion spring, is provided, which pushes the second arm upwards, relative to the first arm. This second arm comprises, on the end away from the rotation point, a conical wheel that presses against the caterpillar track in order to tension the caterpillar track. Optionally, a conical wheel is also provided at the level of the hinge point of the first arm.

According to some embodiments, the chassis may have a length and a width, and wherein the width of the chassis is modifiable.

The chassis can for example change in the transverse direction by using telescopic tubes or making use of a spindle and an associated linear guide, and wherein the spindle is rotatable by means of a spindle motor. This enlargement of the chassis surface mainly has advantages when using milling apparatus. By making the chassis larger in width, the wheel base of the milling apparatus increases, so that the milling movements may be performed more stably. Making the chassis narrower is advantageous if the milling apparatus has to pass through narrower openings, for example narrow(er) door openings and the like.

By making the supporting area larger, the stability of the machine is increased and milling can be quicker. This is the case in both directions of increase or decrease in size. The apparatus will preferably only be used pushed-in if the space does not allow working with it pushed out, e.g. in narrow spaces, for example in a passageway or a toilet.

The chassis preferably has a size of 300 to 600 mm in length and 300 to 600 mm in width, for example a size of 350 to 550 mm in length and 350 to 550 mm in width, said dimensions being measured in the unopened state if the chassis is modifiable in length or width in the case when the length and/or width is modifiable.

In the case of a chassis with modifiable size, the chassis preferably has a size of 800 to 1100 mm in length and 800 to 1100 mm in width, for example a size of 850 to 1050 mm in length and 850 to 1050 mm in width, said dimensions being measured in the fully opened state.

According to some embodiments, the milling apparatus may comprise a chassis and a rotation system, the rotation system comprising at least one supporting surface and a lifting system in order to bring the at least one supporting surface into contact with the underlying floor surface and to lift up the chassis further away from the underlying floor surface, wherein the rotation system further allows the chassis to rotate about an axis perpendicular to the at least one supporting surface.

Preferably the at least one supporting surface comprises only one supporting surface, for example a circular or polygonal supporting surface (triangular, square or rectangular), which may be moved up and down relative to the rest of the chassis. The use of one circular or square supporting surface is preferred. The supporting surface may be lowered hydraulically, pneumatically or electronically, mechanically or electromechanically, so that the entire milling apparatus is raised above this supporting surface. The milling apparatus, apart from the supporting surface, is thus suspended above this one supporting surface. By means of a rotating element, for example a motor, the chassis may be rotated about the axis perpendicular to this supporting surface. Thus, the orientation of the chassis relative to the supporting surface and the floor surface can be changed. After rotation, the supporting surface can be moved upwards again, pneumatically or mechanically, so that the chassis comes back into contact with the floor surface and can be moved over this floor surface. The one supporting surface is no longer in contact with the floor surface.

This supporting surface, or if applicable the sum of the area of all supporting surfaces, is preferably so great that the pressure per area is never above 2000 kPa/m², and preferably not above 1000 kPa/m². This supporting surface, or if applicable the sum of the area of all supporting surfaces, is preferably so great that the pressing of the apparatus does not make an impression in the milled surface.

The chassis may be raised by rotating a spindle, which is firmly attached to the supporting surface, with a motor, for example a high-torque motor. Once the chassis is raised above the floor, the apparatus may be rotated by a second motor, for example also a high-torque motor, which is mounted rigidly on the chassis.

According to some embodiments, the milling apparatus may comprise one or more environment scanners, preferably one or more LiDARs, for scanning at least the floor surface to be milled.

The environment scanner, for example a LiDAR, preferably scans the room in which the floor surface to be milled is located. An alternative is a radar system for scanning the environment, or the use of a 3D station and input of the data from this station into the software of the milling apparatus. Thus, by means of on-board or off-board software, the perimeter of the floor surface and any hindering objects can be located, as well as the position of the milling apparatus on this surface itself. Objects that hinder the milling, or objects that do not allow the apparatus to pass a particular place, are mapped. The milling apparatus has either an integrated processing unit on board, for example with a storage unit and a processor (an "embedded system"), or the milling apparatus comprises a transmitter and/or a Wi-Fi or Bluetooth connection for transmitting the signals from the environment scanner to an external processing unit.

Once the environment has been scanned, a sequence of movements can be calculated for the chassis (optionally comprising the rotation system) and/or the multi-axis robot arm, which will be performed by the milling apparatus.

According to some embodiments, the milling apparatus may comprise an element generating a laser plane, separate from the chassis, and a laser detector for detecting this laser plane that is fastened to the chassis. For example, the milling apparatus detects the laser plane of a laser that is located in the room on a stand or fastened to the wall.

Preferably the element generating a laser plane is a movable element and it is placed high enough to allow operators to approach the milling machine and operate it without disturbing detection of the laser plane by the laser detector. For example, the laser detector may project at least 2 metres above the floor surface to be milled.

The milling apparatus determines its height relative to the laser plane, and then calculates the position and milling depth of the milling cutter, which is necessary in order to generate a milled surface that is located at the set height of this laser plane. The milling apparatus has either an integrated processing unit (embedded system) on board that processes these signals and calculates the milling position, or the milling apparatus comprises a transmitter-receiver for transmitting the signals from the laser detector to an external processing unit. The latter will then process the signals and calculate the milling position and send it back to the milling apparatus.

If the laser plane is disturbed, the milling apparatus may, optionally temporarily, continue to operate on the signals from environment scanners that are present (e.g. LiDARs) and/or proximity detectors (e.g. ultrasonic sensors) and/or IMU sensors present on the apparatus.

In an alternative form, use is made of a 3D station that transmits its signal instantly to the software on the milling apparatus. By means of for example environment scanners (e.g. LiDARs), the milling apparatus can detect its position compared to the signal from the 3D station.

According to some embodiments, the milling apparatus may comprise one or more proximity detectors, which detect approach of the milling cutter to external elements and prevents the milling cutter bumping into them.

These detectors are mounted uniformly distributed around the surface milling cutter. Taking into account the presence of the section of the robot arm that holds the milling cutter. For N detectors, the detectors round the axis of the milling cutter may be mounted at an angle of 360/(N+1) ° to one another, wherein 0° indicates the position of the section of the robot arm, and the first and last of the detectors are placed at 360/(N+1) ° next to this section of the robot arm. Preferably 3 or 4 proximity detectors are used, for example ultrasonic sensors.

According to some embodiments, the milling apparatus may comprise one or more Inertial Measurement Units for measuring the position of the milling apparatus or milling cutter relative to the horizontal plane.

Preferably the milling apparatus comprises at least one IMU that determines the position of the chassis relative to the horizontal plane. Preferably the milling apparatus further comprises at least one IMU that determines the position of the underside of the milling cutter relative to the horizontal plane.

According to an alternative embodiment, the milling cutter can be controlled automatically in the z- and x-direction, for example by a laser system, while an operator controls the y-direction, via for example a joystick or hydraulic valves. According to an alternative embodiment, the operator can operate the machine manually in all directions, e.g. for processing complex situations that are difficult or impossible to perform automatically. In this case the control system limits the movement in the Z-direction so that milling cannot take place below the set level. In addition, the control system keeps the milling cutter and/or the milling machine motor horizontal. The operator determines the path followed by the milling apparatus and when and in what direction the apparatus will turn.

According to some embodiments, the milling apparatus may comprise a battery and/or a connection to the mains for supply of the electrical energy necessary for the operation of the milling apparatus.

The motor for the rotation of the milling cutter is preferably a hollow motor (for example a high-torque motor, hydraulic or air motor) coupled to the milling cutter, and is mounted round the opening centric with the body in the upper side, on the one hand to provide the rotation of the milling cutter, and on the other hand to allow the milled material to be led away centrally.

In general, the milling depth is typically between 2 and 20 mm, such as between 5 and 10 mm. The rotary speed of the milling cutter is preferably selected in relation to the diameter of the milling cutter, and is typically between 1500 and 18000 revolutions per minute (rpm), such as between 2000 and 18000 rpm. This variable rotary speed makes it possible to set a correct cutting speed for on the one hand the milling cutter and on the other hand for optimizing the milling with respect to the material to be milled.

According to some embodiments, the milling apparatus may have a suction system for discharge of milled-off material. According to a first configuration, the extractor system may be coupled to the coupling means for coupling of the opening centric with the body in the upper side of the milling cutter. This is the configuration wherein the milling cutter itself is a milling cutter that leads away milled material centrally, i.e. into the milling cutter. According to another configuration, the extractor system may be coupled to a hood or cover that the milling cutter comprises. The milled-off material is led away on the outer side of the milling cutter and thus via the cover or hood to the extractor system. An extractor system according to the first configuration may optionally also further comprise a cover or hood that encloses the milling cutter. Milled-off material occasionally pushed outwards or springing outwards may thus be led away via the hood or cover. The extractor system itself may be an extractor system known in the prior art.

According to some embodiments, the milling apparatus may comprise a hollow high-torque motor, coupled to the milling cutter, optionally mounted around the opening centric with the body in the upper side.

The milling apparatus further comprises other components, such as a control cabinet, safety infrastructure such as emergency stops, motors and drive mechanisms for controlled movement of various components (for example the wheels or caterpillar tracks, the lifting system, etc.). All motors that are used may preferably be high-torque motors, preferably frameless high-torque motors. In alternative embodiments the milling cutter and the lifting and turning system are driven by high-torque motors, whereas the other motors are stepping motors, or are hydraulic, servo or pneumatic motors.

According to a third aspect of the invention, a milling apparatus is provided suitable for levelling a floor surface, comprising a chassis to which at least one surface milling cutter according to the fourth aspect of the invention is fastened.

This milling apparatus for levelling floor surfaces by surface milling comprises at least one surface milling cutter, wherein the milling apparatus further comprises a movable chassis, and the at least one milling cutter is fastened to and can be moved by the chassis. The at least one surface milling cutter is fastened to the chassis by means of the multi-axis robot with a multi-axis robot arm, the at least one milling cutter is coupled to one end of the robot arm and can be moved by moving the multi-axis robot arm.

According to a fourth aspect of the invention, a surface milling cutter is provided suitable for levelling a floor surface. The surface milling cutter comprises a hollow body comprising a central rotation axis, a wall, an underside in a plane perpendicular to the central axis and an upper side, an opening centric with the body in the upper side, and at least one cutter tooth formed in said wall at the level of the underside of the body, and said cutter tooth has at least one first cutting line located in the plane of the underside and suitable for discharging milled material into the hollow body.

According to some embodiments the body may be built up from one or more than one substantially cylindrical, conical or bell-shaped segments along the central rotation axis.

This hollow volume is designed to allow the milling residues (milling chips) to move inwards and allow them to be evacuated through the opening centric with the body in the upper side by means of a suction system.

The centric opening preferably has a diameter of between 60 and 120 mm.

According to some embodiments, the surface milling cutter may have a coupling means for coupling the surface milling cutter to a hollow-shaft motor, wherein said hollow shaft coincides with the opening centric with the body in the upper side to a suction system for evacuating the milled-off material.

According to some embodiments, the first cutting line of the at least one cutter tooth may be provided by a first cutting face, said first cutting face having a perpendicular in the cutting direction whose projection on the plane of the underside is parallel or turned inwards relative to the tangent of the wall at the level of the first cutting line.

The first cutting line preferably has a length of between 2 and 50 mm, for example between 3 and 30 mm. It may optionally be selected to apply one or more bits over the whole cross-section of the milling cutter. This is for optionally polishing floor surfaces during milling.

According to some embodiments the at least one cutter tooth may have a second cutting line that is oriented upwards along the wall.

According to some embodiments, the second cutting line of the at least one cutter tooth may be provided by a second cutting face, said second cutting face having a perpendicular in the cutting direction whose projection on the plane of the underside is parallel or turned inwards relative to the tangent of the wall at the level of the second cutting line.

The second cutting line preferably has a length between 5 and 150 mm, for example between 5 and 100 mm, such as between 20 and 40 mm.

This second cutting face may be made from one face, or be provided as a series of successive partial faces. These partial faces may be oriented identically, or be oriented differently from one another.

According to some embodiments, at the level of the first and/or second cutting line the body may consist of a cylindrical section.

According to some embodiments the outside diameter of the surface milling cutter at the level of the first cutting line may be between 80 and 400 mm.

The outside diameter of the surface milling cutter at the level of the first cutting line is preferably between 100 and 300 mm.

According to some embodiments, the surface milling cutter may have between 2 and 20 identical cutter teeth.

Preferably these cutter teeth are distributed uniformly round the perimeter of the surface milling cutter.

Preferably the surface milling cutter comprises between 3 and 10 teeth. The number of cutter teeth is preferably odd, such as 3, 5, 7 or 9, which has a reducing effect on vibration of the milling cutter.

According to some embodiments, the distance between the upper side and the underside may be between 100 and 250 mm.

Preferably this height of the milling cutter is between 100 and 200 mm.

The wall of the surface milling cutter is preferably made of a metal, for example steel, hard alloy, titanium, or aluminium or an aluminium alloy, for example high-tensile aluminium. In order to limit the weight of the milling cutter that is to be manipulated, preferably a material is selected with a low specific gravity, such as aluminium or an aluminium alloy. This is certainly the case if the floor surface is made on the side to be milled from a rather soft material, for example polyurethane (also called PUR hereinafter) or insulating mortar (consisting of for example expanded polystyrene (EPS) embedded in a cement matrix).

The cutting faces are preferably made from Widia (tungsten carbide). These cutting faces may alternatively be of hard alloy or diamond-coated materials.

According to some embodiments, the outer side of the body may be provided with an edge, whose perimeter in the radial direction is wider than the first and if applicable second cutting face of the surface milling cutter.

This edge functions as a guard edge and ensures, during use, that the risk of impact by a foreign object on the cutter tooth or teeth is limited or eliminated completely. The edge functions as mechanical protection of the milling cutter. In the case of a second cutting face, this edge is positioned above this second cutting face. Preferably this edge is in the top half of the surface milling cutter, such as positioned near or at the level of the upper surface of the surface milling cutter. This edge has a height of preferably between 3 and 30 mm and preferably projects 3 to 30 mm relative to the milling cutter diameter.

According to a fourth aspect of the invention, a floor system is provided comprising a floor surface levelled by a method according to the third aspect of the invention.

According to a fifth aspect of the invention, a floor system being produced according to a method according to the invention, is provided, comprising
- a supporting structure;
- optionally utility lines applied on this supporting structure;
- a layer of foamed polymer-containing material applied on the supporting structure and if applicable the utility lines, said layer being levelled by milling on the upper side, away from the supporting structure and having a tolerance of less than 1.5 mm per 2 running metres of floor surface;
- a floor heating layer provided with heat conductors supported by the levelled side of the layer of foamed polymer-containing material, or if applicable by the layer of rigid, flat boards;
- optionally a layer of rigid, flat boards;
- an upper external floor covering placed on the floor heating layer.

The layer of foamed polymer-containing material applied on the supporting structure and if applicable the utility lines, is preferably a layer milled to thickness of foamed polymer or EPS mortar or any other thermal and/or acoustic insulating material applied on the supporting structure and if applicable the utility lines, said layer being levelled on the upper side, away from the supporting structure, with a tolerance of less than 1.5 mm per 2 running metres of floor surface.

The supporting structure may be any supporting structure, for example a concrete structure, whether or not cast or sprayed, a wooden supporting structure, floor elements, a floor slab, a steel structure, etc.

The supporting structure may be a supporting structure of an underground floor, a ground floor or a storey of a building comprising one or more non-ground-floor storeys, or of a roof surface.

The floor surface may be a floor surface of a building under construction, or of a building being renovated.

Utility lines may be electric wiring, water mains, drainage pipes, air-conditioning lines, pipes for a central vacuum cleaner, lines/channels for ventilation purposes, conduits and similar.

The floor heating layer may be any layer, for example a layer of XPS, EPS, PUR, MDF, OSB, recycled plastic, triplex, cement-bonded fibreboard and the like, in which heating tubes are embedded. Optionally, between this layer and the heating tubes there is a metal plate, for example an aluminium plate, to distribute the heat.

The upper external floor covering may be wall-to-wall carpet, wooden or polymer laminate, stone, tiles, or any other floor covering.

According to some embodiments, the layer of foamed polymer-containing material may be foamed thermal insulating material.

According to some embodiments, the layer of foamed polymer-containing material may be polyurethane, foamed and/or sprayed in situ.

According to some embodiments, the layer of foamed polymer-containing material may be sprayed-on foamed polyurethane in sheet form.

The properties of said sprayed-on foamed polyurethane are preferably a lambda of at least 0.024, a load-bearing capacity of 2000 kPa/m², a water absorption of max. 2% and a density of 36 to 45 kg/m³.

The independent claims and the dependent claims present specific and preferred features of the embodiments of the invention. Features of the dependent claims may be combined with features of the independent claims and the dependent claims, or with features described above and/or hereunder, in any suitable way that would be obvious for a person skilled in the art.

The aforementioned and other features, properties and advantages of the present invention will be explained by means of the following embodiment examples, optionally in combination with the drawings.

The description of these embodiment examples is given by way of explanation, without the intention of limiting the scope of the invention. The reference numbers in the description given hereunder refer to the drawings. The same reference numbers in optionally different figures refer to identical or similar elements.

### Brief description of the drawings

For better illustration of the features of the invention, some preferred embodiments are described hereunder as examples without any limiting character, referring to the appended drawings, in which:
Fig. 1 illustrates schematically a surface milling cutter according to the fourth aspect of the invention.
Figs. 2, 3, and 4 illustrate schematically a part of or the whole of a milling apparatus according to the invention.
Figs. 5 and 6 illustrate schematically a method for levelling a floor surface according to the invention.
Fig. 7 illustrates a floor system according to the invention.

### Description of embodiments

The present invention is described hereunder, making use of specific embodiments.

It is clear that, although the embodiments and/or the materials for the provision of embodiments according to the present invention are discussed, various modifications or changes may be applied without departing from the scope and/or the spirit of the present invention. The present invention is by no means limited to the embodiments described above, but may be implemented according to different variants while remaining within the scope of the present invention.

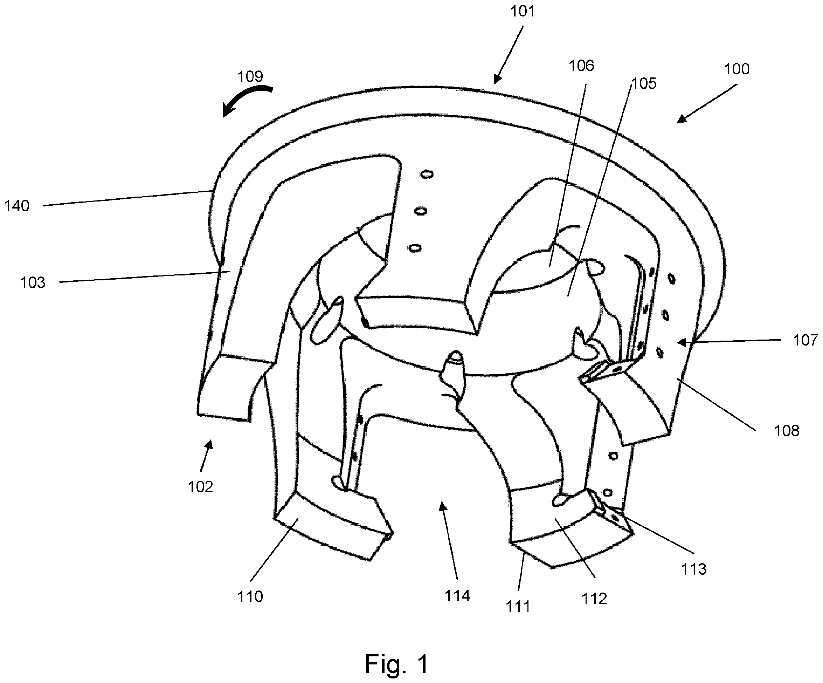

A surface milling cutter 100 suitable for levelling a floor surface according to a method of the first aspect of the invention is shown in Fig. 1. The milling cutter has an outside diameter at the level of the teeth of 200 mm, and a height from the upper side 101 to the underside 102 of 110 mm. The surface milling cutter 100, which is intended for surface milling, and so may indeed also be regarded as a surface milling cutter, has a hollow body 103 round a central axis and is suitable for rotation in a direction of rotation 109 round this central axis. The wall 107 of the surface milling cutter has a conical part 105 that provides the milling cutter with the upper side 101. In this upper side 101, there is an opening 106 centric with the body 103. The wall 107 further has one cylindrical part 108 in which five cutter teeth 110 are formed. These teeth are positioned at an identical distance from each other and uniformly around the perimeter of the wall 107. Other embodiments with a different number and magnitude of the milling cutter dimensions are possible. However, the surface milling cutter preferably has an odd number of cutter teeth uniformly distributed round the perimeter. Each tooth has a tooth heel 111, a tooth body 112 and a front of tooth 113. Between two cutter teeth there is a tooth cavity 114. On each front of tooth, a first cutting face with a first cutting line 121 is mounted, which is provided by a bit (not shown in Fig. 1). This first cutting line is located in the plane of the underside 102 and is suitable for leading milled material away into the hollow body 103. The tooth spacing is about 125 mm.

A second cutting face with a second cutting line 131 is mounted on each front of tooth. This second cutting face is made up in this case of three partial faces of three bits (not shown in Fig. 1), all with identical orientation. For this second cutting face, this face has a perpendicular in the cutting direction whose projection on the plane of the underside is parallel or turned inwards relative to the tangent of the wall 107 at the level of the second cutting line 131. Thus, cutoff chips will be pushed inwards, into the hollow body 103.

The cutting plate has a first cutting line with a length of 19 mm; the second cutting line has a length of 3 times 19 mm. The cutting faces are small bits preferably made of Widia (tungsten carbide). These bits may also alternatively be of hard alloy or diamond-coated materials, depending on the material that is to be milled. The wall 103 is made from high-tensile aluminium.

For the first cutting faces, the rake angle is about 55° and the clearance angle about 5°. For the second cutting faces the rake angle is about 55° relative to the perimeter and the clearance angle about 37°.

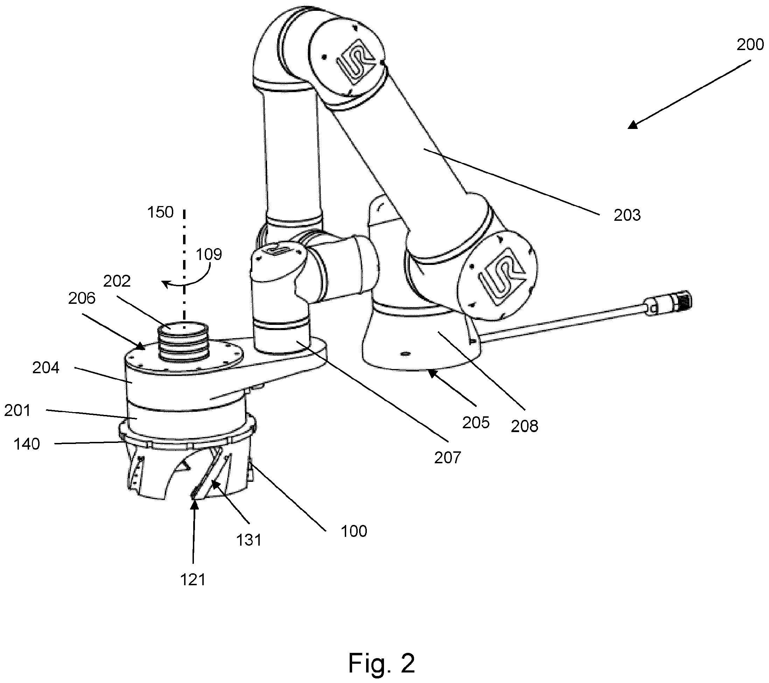

Fig. 2 gives a clearer view of the second cutting line 131. The cutting line 131 goes along the external wall of the cylindrical part 108 of the wall 103, and runs at an angle of about 90° relative to the central axis 150, runs radially relative to the axis, and is inclined backwards in accordance with the direction of rotation 109.

On the upper side, the surface milling cutter has a guard edge 140 about 10 mm high, and this guard edge 140 projects about 8 mm from the wall 103.

Also on the upper side, the surface milling cutter has a coupling means (not shown in Fig. 1), for example a centring ring, a vertical edge or a flange, on which a hollow-shaft motor may be mounted to allow the surface milling cutter to rotate about its central axis. This may be coupled in a simple manner by means of a bolt system or similar.

Fig. 2 shows a part of a milling apparatus 300 according to the invention. Fig. 2 shows the control element 200 for the surface milling cutter, more specifically the surface milling cutter 100 that is coupled to a hollow-shaft motor 201, said motor 201 in its turn being provided with a coupling means 202 for coupling an extraction system to the hollow space of the surface milling cutter 100. The motor 201 is in its turn also coupled to a six-axis robot arm 203 via connecting piece 204, which forms part of the motor. This multi-axis robot arm 203 forms part of the multi-axis robot that will couple the surface milling cutter 100 to a chassis. Regardless of the position of the base 205 of the robot arm 203 on the chassis, the surface milling cutter will be movable in the x-, y- and z-direction by movement of the parts of the robot arm 203 relative to one another.

Around the axis 150 of the motor 201 and surface milling cutter 100, on the platform 206 of the connecting piece 204, four ultrasonic proximity sensors will be positioned (not shown in Fig. 2), which will determine the position of the milling cutter and motor relative to surrounding obstacles very accurately, namely to a tenth or a few tenths of millimetres. The first sensor is positioned at 72° from the imaginary line between axis and centre of the first section 207 of the robot arm 203, rotating to the left about the axis 150. The fourth sensor is positioned at 72° from the imaginary line between axis and centre of the first section 207 of the robot arm 203, rotating to the right about the axis 150. Both of the other sensors are positioned at an angle of 72° relative to the preceding and the next sensor round the rotation axis 150.

On this same platform 206, between the axis 150 and the centre of the first section 207 of the robot arm 203, on the imaginary line between this axis and the centre of the first section 207 of the robot arm 203, a first IMU (inertial measurement unit) sensor will be placed, which measures any rotation round this imaginary line and sends it to the software that controls the movement of the milling apparatus 300. In an alternative form, the IMU is not positioned on but underneath this platform, or is incorporated in the connecting piece. This is again in the same relative position relative to this imaginary line.

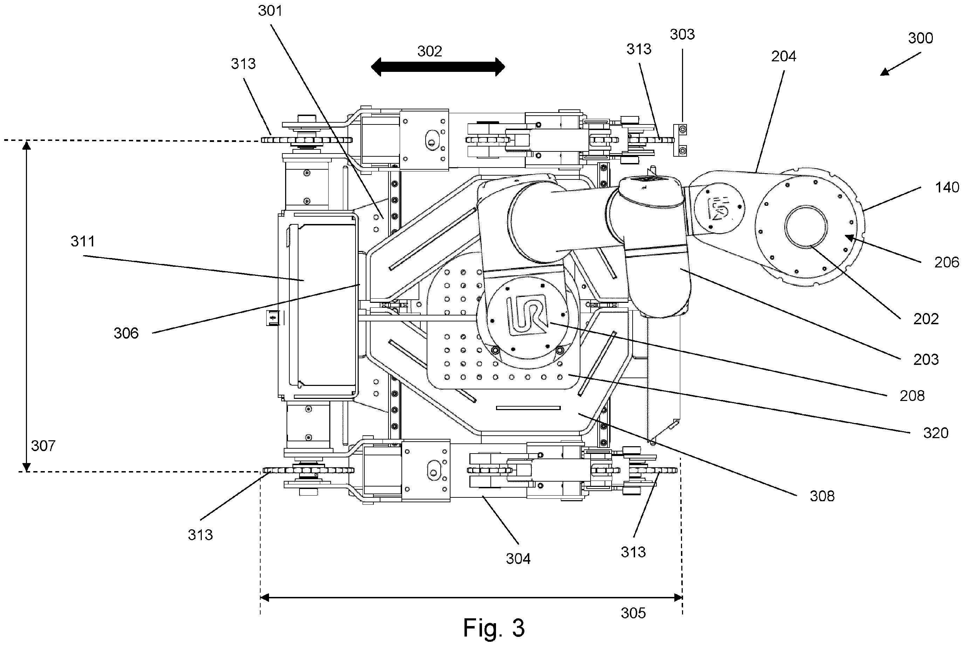

Fig. 3 shows more generally a milling apparatus 300 according to the invention. The surface milling cutter 100 coupled to the motor 201 and coupling means 204 is mounted on the multi-axis robot arm 203. The robot is mounted with its base on the chassis 301, more specifically on a mounting plate 320. A second IMU sensor (not shown in Fig. 3) is mounted on the mounting plate 320, on an imaginary line that is parallel to the direction of travel 302 and the centre of the last section 208 of the robot arm 203. This IMU will transmit any rotation in all axes round this imaginary line to the software of the milling apparatus 300, which controls the movements of the milling apparatus.

The chassis, made to be able to travel forwards and backwards and at the same time to be able to mill when travelling in the direction of travel 302, has two caterpillar tracks 303, one on each side of the chassis. For clarity, the figures show the conical wheels 313, but not the caterpillar tracks. As an alternative, the milling apparatus may be equipped with four carrying wheels instead of the four conical wheels and a caterpillar track. In that case preferably at least 2 wheels are driven, one on each side of the milling apparatus.

Each caterpillar track 303 has a length 305 that may be varied by opening or closing an extension piece 304 that has an opening and closing motion based on a spindle motor and associated guides. In the open state, the basic length 305 of each caterpillar track is about 1000 mm, with a track width of about 160 mm. In the closed state, as shown in Fig. 3, this is only 800 mm. Thus, the length 305 of the chassis may be increased or reduced, i.e. altered. Both caterpillar tracks operate synchronously during milling and are driven by an electric motor.

The chassis 301 can also be changed in width by sliding extension pieces 306 in and out, which operate on the same principle as extension pieces 304. The carrying arms 308 are pushed open. The width of the chassis 307, or rather the distance between the outer sides of the two caterpillar tracks, can be varied between 780 and 1050 mm.

The carrying components 308 of the chassis are preferably made of aluminium, with weight savings as the aim.

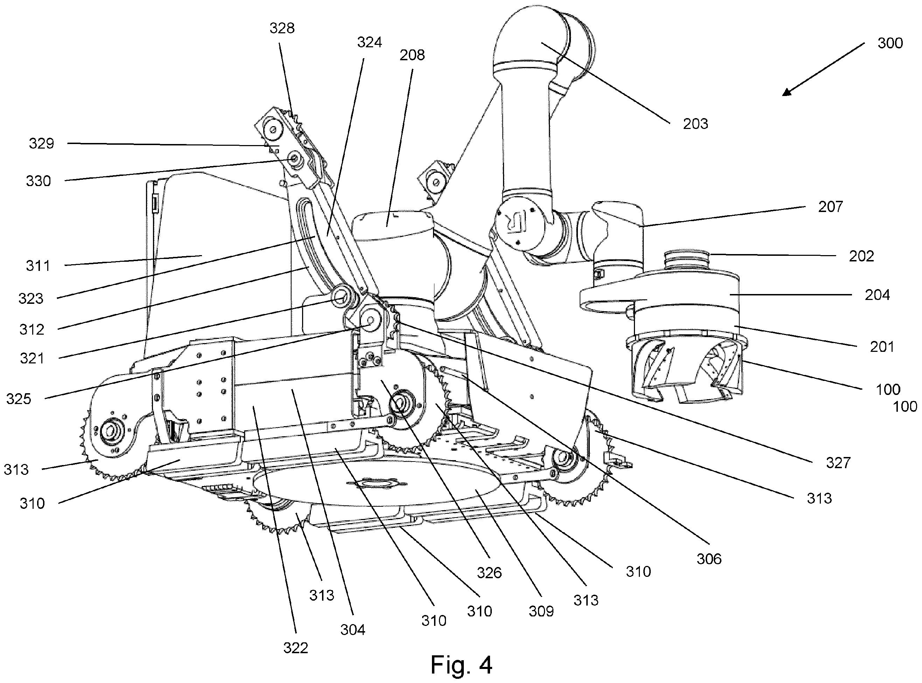

A lifting plate 309 is mounted at the bottom of the chassis, as shown in Fig. 4. The lifting plate 309 is pulled in or pushed out in the vertical direction by the action of an electric motor. The lifting plate can be pushed out so far that the caterpillar tracks 303 are no longer in contact with the ground. Thus, the milling apparatus is only carried by the lifting plate. The chassis 300 can be rotated about the axis of the lifting plate by means of an indexable electric motor in order to change the direction of movement 302 of the chassis relative to the ground.

Fig. 4 also shows 4 supporting blocks 310. These supporting blocks rest on the inside of the caterpillar tracks and serve to distribute the weight of the chassis and the whole milling apparatus over the area of the caterpillar tracks.

The milling apparatus 300 further comprises an electronic control cabinet 311 for controlling the various motors and components, as well as for processing the signals that are generated by the positioning equipment on the basis of suitable software.

This positioning equipment (not shown in Figs. 1 to 4) comprises two LiDARs, which scan and record the environment in 3D. The data about all objects, walls and floor surfaces are processed to give a 3D spatial image of the room in which the floor to be levelled is located. The use of two or more LiDARs gives a more accurate 3D spatial image. This may also serve as a ground plan for further purposes, for example the made-to-measure layout plan for installing floor heating.

This positioning equipment further comprises a laser detector, which projects above the chassis at a height of about 2 metres above the floor surface. Together with an external laser plane generator, this laser detector measures the height at which the detector, and in consequence the chassis, is located relative to the desired surface height to be milled. Via the LiDAR, it is known in what position the chassis is located in the room. Since the positions of all components of the milling apparatus are known or are measurable (length and angles of robot arms, magnitude of milling height, etc.) it is possible to calculate at what position and height the underside of the surface milling cutter is located. It is then also possible to calculate the necessary movements in order to bring the underside, and therefore the cutter face, to the height of the surface to be milled.

Fig. 4 also shows the clamping components 312 for automatically clamping the caterpillar tracks if the extension pieces 304 change in length.

A guide pin 321, which comprises an axle mounted on bearings and is fixed rigidly to the non-moving part 322 of the extension piece 304, moves in a curved opening 323 of a guide piece 324. This guide piece 324, which is firmly mounted on the moving part 326 of the extension piece, and hinges about axis 325, will rotate the guide piece towards the non-moving part 322 if the extension piece 304 is pushed out. This downward rotation compensates the longer distance from the caterpillar track, which is on the ground between the two conical wheels 313. The caterpillar track is led round the clamping component 312 by conical wheels 327 and 328. The conical wheel 328 is mounted on a clamping arm 329 that is rotated about axis 330 by means of a torsion spring. This conical wheel 328 is pushed upwards against the caterpillar track and will in consequence provide the caterpillar track with the appropriate tension.

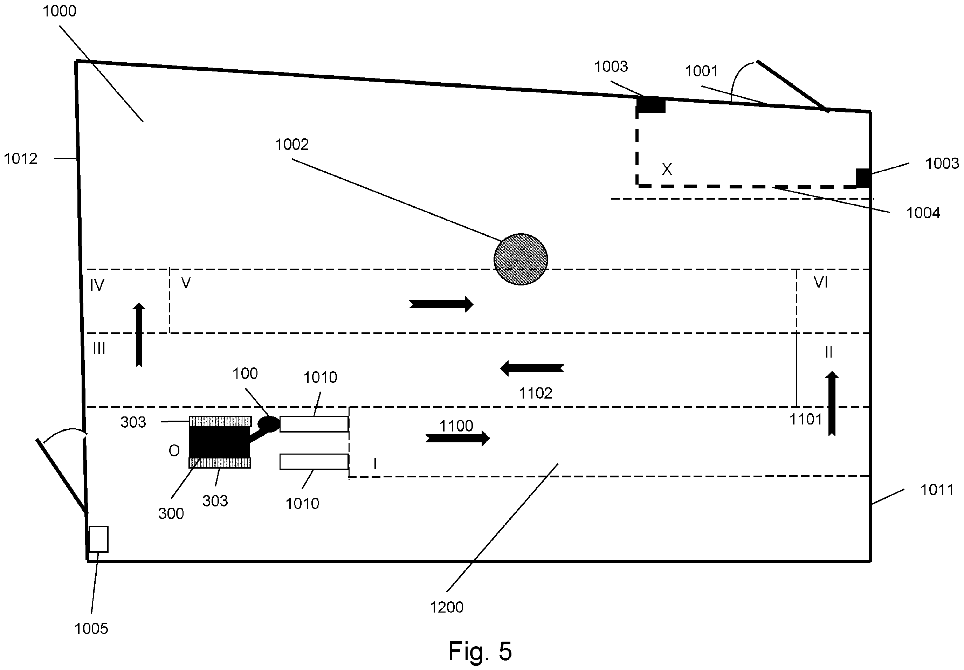

A method for levelling a floor surface 1000 is shown in Fig. 5. The milling apparatus 300, with caterpillar tracks 303 and surface milling cutter 100 as indicated, is placed at the starting position 0 on the unmade floor surface. The floor is to be levelled to a horizontal height H1, except in zone X, where the height of the floor must decrease, gradually to the height of the threshold height 1001.

In a first step, the room is scanned by means of the LiDARs, and all objects, such as pillar 1002, are located. The use of several LiDARs provides a more accurate and more detailed image, with greater dimensional precision. It makes as it were a ground plan. The direction points 1003, which indicate the perimeter 1004 of the inclined plane, are also mapped. The ground plan may be forwarded for example via Wi-Fi to an external source, and stored for later use, for example for configuring the layout plan of a floor heating system. Laser plane generator 1005 generates a reference plane that is horizontal and is located 2 metres above the desired surface height. The laser detector of the milling apparatus determines the vertical movement over which the surface milling cutter 100 must travel to bring the underside of the milling cutter to this desired height.

Initially the surface milling cutter 100 will mill two tracks 1010 to the desired height. The milling apparatus moves forwards and propels the caterpillar tracks in these tracks. The software of the "embedded system" in the milling apparatus, or the software in an external processing unit, has meanwhile determined a movement sequence, and as the next step, zone I is milled off, while the chassis travels forwards in direction 1100 and the milling cutter moves from left to right and back again. The milling width may, as shown in Fig. 5, be the width of the milling apparatus, but the milling width, which is the deflection in the Y-direction, may reach beyond the width of the milling apparatus. A width of 1400 mm can be reached, this is 200 mm beyond the width of the milling apparatus on both sides. Meanwhile, via the laser detector, the height of the chassis and in consequence via calculation, the bottom face of the surface milling cutter will be calculated and adjusted continuously. At the end of zone I, the surface milling cutter has levelled the floor surface up to the wall 1011.

At the same time with the LiDARs, the four ultrasonic sensors will measure and monitor the approach of the milling cutter to the wall more accurately. These sensors have a measurement range of about 400 mm and an accuracy of 0.1 mm. The milling cutter will mill accurately to an accuracy of 0.1 mm by means of these sensors. The IMU sensors measure any tilting of the chassis and/or of the milling cutter, and their signal will allow the software to adjust the position of the milling cutter.

The LiDARs, together with the ultrasonic sensors, measure the end of zone I. The milling apparatus stops its forward movement, travels back to the centre distance of the next milling pass and lifts the milling cutter from the floor surface. The milling apparatus allows the lifting plate to descend and pushes the caterpillar tracks of the chassis until they are suspended above the floor surface. Since the wall 1011 is at an angle of 90° relative to the first milling direction 1100, the chassis will be turned a quarter turn to the left and lowered back onto the already levelled end part of zone I, whereas the centre of the chassis is at the centre distance of the next milling pass. It should be noted that the chassis can also turn less than 90°, left or right, but can also make larger angles, up to 180° left and right.

The milling apparatus moves a little way in direction 1101 forwards while zone II is milled to height. Lifting and turning a quarter turn is repeated, so that the milling apparatus can begin milling zone III in direction 1102. The apparatus now has the direction reversed. At the end of zone III, turning of the apparatus is repeated. The lifting plate lifts the chassis up and the chassis rotates almost 90° to the right. The rotation ensures that the direction of travel is parallel to the wall 1012. The milling cutter mills zone IV and then the milling apparatus is moved until it is in zone IV. The milling apparatus lifts itself back up and rotates further to the right until the direction of travel is parallel to the direction of travel 1102 but in the opposite direction. Milling is begun again, this time of zone V. It should be noted that as an alternative, instead of rotating until the direction of travel is parallel to the wall 1012, the milling apparatus can rotate so that the direction of travel is perpendicular to the direction 1102. A slightly different zone IV will then be milled.

At the level of the obstacle, namely pillar 1002, the robot arm will guide the milling cutter so that the milling cutter does not come into contact with the pillar 1002. If the track, and thus the width of the milling apparatus, is too wide to go past the pillar, either a lifting movement can be performed or the width of the chassis can be reduced. Because the LiDARs have mapped the troublesome objects beforehand, the widths of the milling tracks will be calculated so that by making the milling width narrower and/or by making the width of the chassis narrower, the apparatus can pass each object while it moves ahead. This calculating of the desired milling widths for each movement may take place on the basis of artificial intelligence, for example. The software may also for example calculate where it is best for the apparatus to begin its milling pass so as to be able to go past the obstacle with a set width, so that the apparatus has to adjust its wheel base as little as possible.

Making the chassis width narrower or wider (and optionally shortening or extending it) also takes place by means of the lifting plate. The apparatus stops its forward or backward movement, pushes itself up with the lifting plate, adjusts the width and/or length of the chassis, after which the lifting plate is moved back and the chassis, with altered width and/or length, can continue its travel. This all takes place in order to avoid turning traces on the milled substrate.

The milling-off in zones is repeated until the milling cutter has milled off the whole surface up to doorjamb 1001. The right side of the floor surface has been levelled. After this is finished, the robot will move back to the starting position in zone I, and level the left side of the floor surface in a similar way.

During milling, if the milling cutter enters a zone where the gradient of the surface to be milled is no longer parallel to the laser plane, for example within perimeter 1004, the adjustment of the cutter head, and better still the robot arms that determine the position of the cutter head, will be controlled so that the milled-off surface has the required gradient. In this way, a levelled floor surface 1200 is provided. One or more inertial measurement units (IMUs) on the chassis and on the milling machine motor may assist the calculations to make a uniform transition between the different cutting planes and transitions to a slope.

Possibly the LiDARs also perform a safety function during milling. Moving objects, for example people who are carrying previously defined objects, for example who are wearing a high-visibility vest, and which allow the LiDAR to recognize this person as an operator, will be able to come closer to the apparatus. Persons not carrying this object will be detected as non-operator. If these non-operators come too close, this may trigger certain effects in the apparatus, for example to go into an alarm condition or even come to a stop. For the latter, coming to a stop, the ultrasonic detectors may also intervene, stopping the apparatus if moving objects or people come too close to the machine in operation.

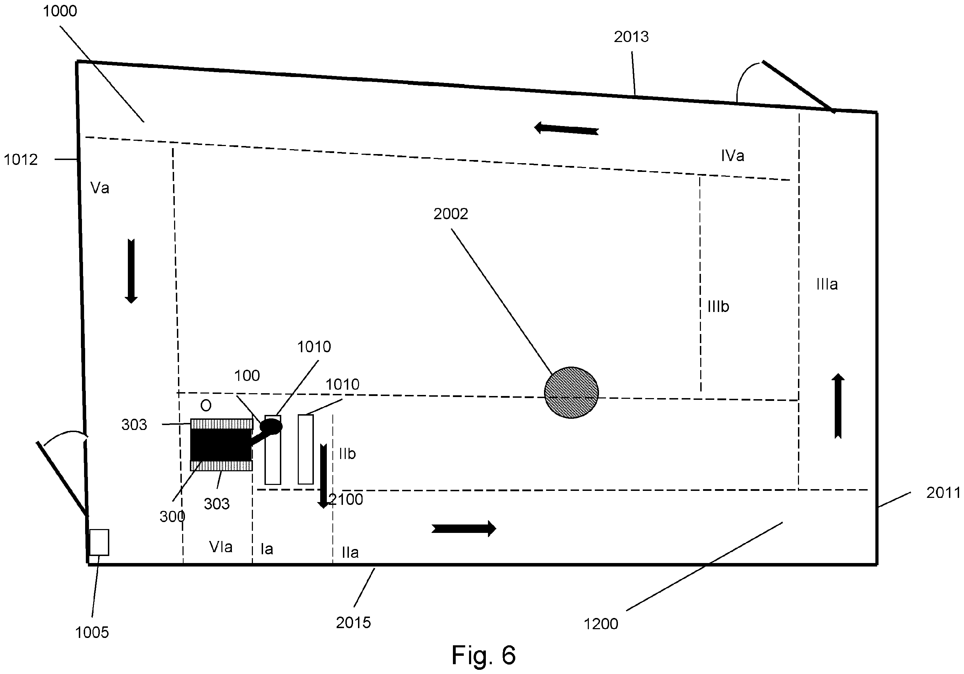

An alternative method, which uses similar or identical movements of the milling apparatus as described for Fig. 5, is shown in Fig. 6. This method has the advantage that the milling apparatus must be lifted fewer times, and thus is more economical of time. The milling apparatus 300, with the caterpillar tracks 303 and surface milling cutter 100 indicated, is placed at the starting position 0 on the unmade floor surface. The floor is to be levelled to a horizontal height H1.

In a first step, the room is scanned by means of the LiDARs, and all objects, such as pillar 2002 are located. Laser plane generator 1005 generates a reference plane that is horizontal and is located 2 metres above the desired surface height. The laser detector of the milling apparatus determines the vertical movement over which the surface milling cutter 100 must travel in order to bring the underside of the milling cutter to this desired height.

Initially, the surface milling cutter 100 proceeds to mill one of the two tracks 1010 to the desired height, namely the track closest to the milling apparatus. The milling apparatus moves forward a little and then mills the second of the two tracks 1010 to the desired height. Then the milling apparatus travels forward until its centre is centred between the two tracks 1010 that have been made. The milling apparatus lifts itself, by raising the apparatus by means of the lifting plate, and turns 90° to the right. The milling apparatus drops back so that the two caterpillar tracks are in the already milled tracks 1010. The software of the milling apparatus has in the meantime determined a sequence of movements. Then zone Ia is milled off, whereas the chassis travels forwards in direction 2100 and the milling cutter moves from left to right and back again. The milling cutter moves over a width wider than the width of the chassis. Meanwhile, the height of the chassis and in consequence by calculation, the bottom face of the surface milling cutter will be calculated and adjusted continuously, via the laser detector. At the end of zone la, the surface milling cutter has levelled the floor surface up to the wall 2015. The LiDARs, if applicable together with the ultrasonic sensors, measure the end of zone Ia. The milling apparatus stops its forward movement and lifts the milling cutter from the floor surface. The milling apparatus allows the lifting plate to descend and pushes the chassis until the caterpillar tracks are suspended above the floor surface. The chassis is turned a quarter turn to the left and is lowered back onto the already levelled end part of zone Ia. The milling apparatus moves forwards along wall 2015 so that a zone IIa is levelled. The apparatus 300 travels until the milling cutter has reached wall 2011. In this corner of the room, the apparatus is turned until the apparatus is parallel to wall 2011. The milling apparatus moves forwards again and levels zone IIIa. This movement along the walls of the room is repeated as shown in Fig. 6, until the whole perimeter of the room is levelled along zones IVa, Va and VIa. The apparatus now reaches zone Ia again, it is turned a quarter turn to the left and moves for example linearly, continuing to mill until it reaches wall 2013 again (not shown in Fig. 6). The apparatus turns as described above and mills a strip in the opposite direction, similar to as in Fig. 5. By moving to and fro over the surface, the whole floor surface can be levelled. Either, as shown in Fig. 6, after coming back to zone Ia, the milling apparatus will be positioned automatically in a path next to the milled path la, and will once again level a zone IIb parallel to wall 2015. There then follows a quarter turn to the right and a zone IIIb parallel to wall 2011. Thus, the apparatus 300 levels by making concentric movements over the whole surface to be levelled.

At the level of the obstacle, pillar 2002, the robot arm will control the milling cutter in such a way that the milling cutter does not come into contact with the pillar 1002, and make a narrower y-movement. The width of the strips to be milled is selected so that the chassis can go past the obstacles. Optionally, a narrowing of the chassis width is taken into account. Just as in the example in Fig. 5, the widths of the milling strips will be calculated so that the apparatus is able to pass every object, optionally with reduced width, and adapted milling movement.

Or under the control of the software, the milling apparatus can choose which movement (linear or concentric) will be used to level the floor surface, or this may be set by an operator.

By means of the software, during levelling, a record will be kept of which parts of the ground plan have already been milled.

All processing by software can either be performed by an integrated processing unit (embedded system), or by an external processing unit, which will be provided with the data by data transfer, for example via Wi-Fi or Bluetooth.

If adjoining rooms are to be levelled, the software or an operator can choose, at the level of a door jamb or passage, whether it will first level the additional room, or whether this additional room will be levelled (or not) after the present room is finished.

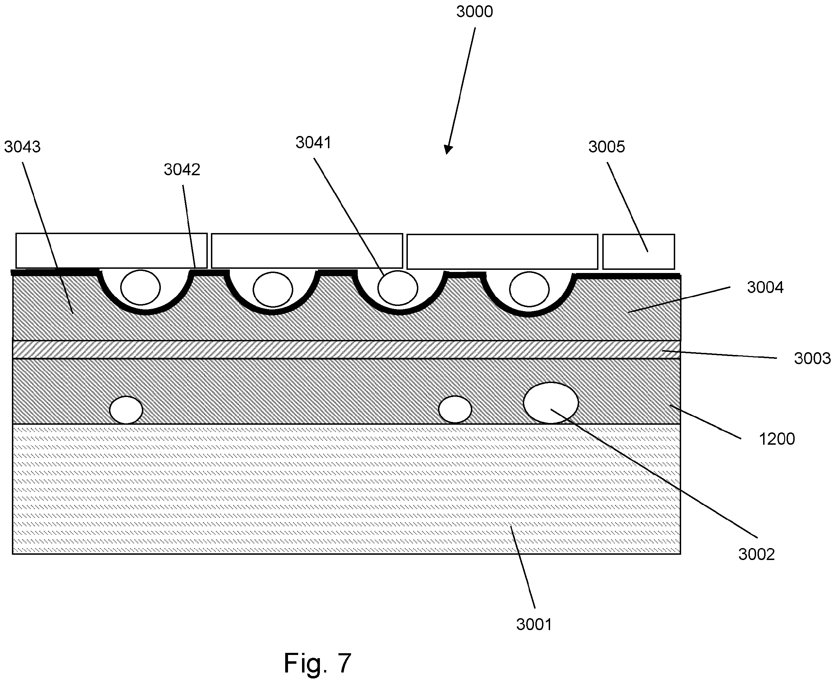

The resultant levelled floor surfaces 1200, for example manufactured from sprayed polyurethane foam, may form part of a floor system according to the invention as presented in Fig. 7.

A floor system 3000 comprises
- a supporting structure 3001, for example a concrete substrate of a storey to be renovated;
- utility lines 3002 applied on this supporting structure 3001;
- a floor surface being a layer of surface-milled thermal insulation 1200 obtained according to the method explained above. This floor surface is for example a layer of foamed polymer-containing material applied on the supporting structure and if applicable the utility lines, said layer being levelled on the upper side, away from the supporting structure, with a tolerance of less than 1.5 mm on the complete floor surface;
- a layer of rigid, flat boards 3003 on the levelled side of the layer of foamed polymer-containing material; for example a series of cement-bonded fibreboards, such as cement-bonded fibreboards from the company Knauf, with a thickness of 12 mm or 14 mm. This may be necessary if for example no floor heating is used. A floor covering may then be placed or glued thereon. This layer may also be omitted if the superjacent layer 3004 is sufficiently rigid and sturdy to distribute point loads on the floor. Optionally, double-layer adhesive may also be used on top of layer 3004, wherein in this adhesive, a reinforcing net is placed between the layers of adhesive in order to obtain a sturdier structure.
- a floor heating layer 3004, in this case a dry floor heating system provided with heat conductors 3041, supported by the levelled side of the layer of foamed polymer-containing material, or if applicable by the layer of rigid, flat boards; besides for example aluminium heat conductors, for example electric floor heating or hot water pipes, this layer may also comprise an aluminium layer 3042 located on an insulating material 3043 of for example EPS, XPS, recycled plastic, MDF OSB, all triplex grades or similar.
- An upper external floor covering 3005 placed on the floor heating layer, for example a layer of ceramic tiles glued on the floor heating layer 3004. Optionally, a decoupling mat is further provided, to remove stresses and/or a reinforcing net made of plastic in a double-layer adhesive.

## Claims

1. Method for manufacturing a floor system (3000), comprising the steps:
• providing a supporting structure (3001);
• optionally applying utility lines (3002) on this supporting structure;
• applying a foamed polymer-containing material (1200) applied on the supporting structure and if applicable the utility lines in order to obtain a floor surface;
• levelling the floor surface by means of a milling apparatus (300) comprising at least one milling cutter (100);
• optionally applying a layer of rigid, flat boards (3003) on the levelled side of the layer of foamed polymer-containing material;
• applying a floor heating layer (3004) provided with heat conductors (3041) supported by the levelled side of the layer of foamed polymer-containing material, or if applicable by the layer of rigid, flat boards;
• applying an upper external floor covering (3005) placed on the floor heating layer.

2. Method according to Claim 1, wherein application of a layer of foamed polymer-containing material (1200) comprises spraying-on of the layer of foamed polymer-containing material, preferably foamed polyurethane foam.

3. Method according to one of the preceding claims, wherein the at least one milling cutter (100) is a surface milling cutter.

4. Method according to one of the preceding claims, wherein the milling apparatus (300) comprises a suction system for discharge of milled-off material, the method further comprising the removal of milled-off material via the suction system.

5. Method according to one of the preceding claims, wherein the milling apparatus (300) comprises a multi-axis robot with a multi-axis robot arm (203), the at least one milling cutter (100) is coupled to one end of the robot arm and can be moved by moving the multi-axis robot arm, the method further comprising the step of moving the at least one milling cutter relative to the floor surface to be milled, on the basis of movement of one or more axes of the multi-axis robot arm.

6. Method according to one of the preceding claims, wherein the milling apparatus (300) comprises a movable chassis (301), the at least one milling cutter (100) is fastened to and can be moved by the chassis (301), if applicable the milling cutter is fastened to the chassis by means of the multi-axis robot, the method further comprising the step of moving the milling cutter relative to the floor surface to be milled, on the basis of movement of the chassis.

7. Method according to Claim 6, wherein the chassis comprises two or more caterpillar tracks (303) for being propelled on the floor surface, the method comprising milling of a number of tracks (1010), equal to the number of caterpillar tracks, and positioning of the milling apparatus (300) with the caterpillar tracks in these milled tracks for starting the milling of the rest of the floor surface.

8. Method according to one of the preceding claims, wherein the milling apparatus (300) comprises a chassis (301) and a rotation system, the rotation system comprising at least one supporting surface and a lifting system (309) in order to bring the at least one supporting surface into contact with the underlying floor surface and to lift up the chassis further away from the underlying floor surface, wherein the rotation system further allows the chassis to rotate about an axis perpendicular to the at least one supporting surface, the method comprising the step of raising the chassis (301) away from the floor surface and altering the orientation of the chassis by rotating the chassis relative to the lifting system.

9. Method according to one of the preceding claims, wherein the milling apparatus (300) comprises an environment scanner, preferably a LiDAR, for scanning at least the floor surface to be milled, the method comprises the step of scanning at least the floor surface to be milled, and locating objects that hamper milling.

10. Method according to Claim 9, wherein the milling apparatus (300) comprises a multi-axis robot with a multi-axis robot arm (203), the at least one milling cutter (100) is coupled to one end of the robot arm and can be moved by moving the multi-axis robot arm, the milling apparatus further comprises a movable chassis (301), the at least one milling cutter is fastened to and can be moved by the chassis, if applicable the milling cutter is fastened to the chassis by means of the multi-axis robot, the method further comprises the step of calculating a sequence of movements of the chassis and/or robot arm in order to mill off and level the floor surface completely.

11. Method according to one of the preceding claims, wherein the milling apparatus (300) comprises a movable chassis (301), the at least one milling cutter (100) is fastened to and can be moved by the chassis, the milling apparatus comprises an element (1005) generating a laser plane, separate from the chassis, and a laser detector for detecting this laser plane that is fastened to the chassis, the method further comprises the step of calculating the height of the milling cutter also by determining the height of the laser detector relative to the laser plane, and optionally adjusting the height of the milling cutter relative to the defined height of the laser detector relative to the laser plane.

12. Method according to one of the preceding claims, wherein the floor surface is manufactured from sprayed-on polyurethane foam or mortar that comprises foamed polystyrene or expanded polystyrene in a matrix of mortar.

13. Method according to one of the preceding claims, wherein the thickness of the material to be milled-off is at least 1 mm.

14. Floor system (3000) produced according to any one of the preceding claims,said system comprising
• a supporting structure (3001);
• optionally utility lines (3002) applied on this supporting structure;
• a layer of foamed polymer-containing material (1200) applied on the supporting structure and if applicable the utility lines, said layer being levelled by milling on the upper side, away from the supporting structure, and having a tolerance of less than 1.5 mm per 2 running metres of floor surface;
*optionally a layer of rigid, flat board;
• a floor heating layer (3004) provided with heat conductors (3041) supported by the levelled side of the layer of foamed polymer-containing material, or if applicable by the layer of rigid, flat boards;
• an upper external floor (3005) covering placed on the floor heating layer.

## Patentansprüche

1. Verfahren zum Herstellen eines Fußbodensystems (3000), umfassend die Schritte:
• Bereitstellen einer tragenden Struktur (3001);
• optionales Anbringen von Versorgungsleitungen (3002) an dieser tragenden Struktur;
• Aufbringen eines geschäumten, polymerhaltigen Materials (1200), das auf die tragende Struktur und gegebenenfalls auf die Versorgungsleitungen aufgebracht wird, um eine Fußbodenoberfläche zu erhalten;
• Nivellieren der Fußbodenoberfläche mittels einer Fräsvorrichtung (300), die mindestens einen Fräser (100) umfasst;
• optionales Aufbringen einer Schicht aus starren, flachen Platten (3003) auf der nivellierten Seite der Schicht aus geschäumtem, polymerhaltigem Material;
• Aufbringen einer Fußbodenheizungsschicht (3004), die mit Wärmeleitern (3041) versehen ist und von der nivellierten Seite der Schicht aus geschäumtem, polymerhaltigem Material oder gegebenenfalls von der Schicht aus starren, flachen Platten getragen wird;
• Aufbringen eines oberen Außenfußbodenbelags (3005), der auf die Fußbodenheizungsschicht gelegt wird.

2. Verfahren nach Anspruch 1, wobei das Aufbringen einer Schicht aus geschäumtem polymerhaltigem Material (1200) das Aufsprühen der Schicht aus geschäumtem polymerhaltigem Material, vorzugsweise geschäumtem Polyurethanschaum, umfasst.

3. Verfahren nach einem der vorhergehenden Ansprüche, wobei der mindestens eine Fräser (100) ein Planfräser ist.

4. Verfahren nach einem der vorhergehenden Ansprüche, wobei die Fräsvorrichtung (300) ein Absaugsystem zum Abführen von abgefrästem Material umfasst, wobei das Verfahren ferner das Entfernen von abgefrästem Material über das Absaugsystem umfasst.

5. Verfahren nach einem der vorhergehenden Ansprüche, wobei die Fräsvorrichtung (300) einen mehrachsigen Roboter mit einem mehrachsigen Roboterarm (203) umfasst, wobei der mindestens eine Fräser (100) an ein Ende des Roboterarms gekoppelt ist und durch Bewegen des mehrachsigen Roboterarms bewegt werden kann, wobei das Verfahren ferner den Schritt des Bewegens des mindestens einen Fräsers relativ zur zu fräsenden Fußbodenoberfläche auf der Grundlage der Bewegung einer oder mehrerer Achsen des mehrachsigen Roboterarms umfasst.

6. Verfahren nach einem der vorhergehenden Ansprüche, wobei die Fräsvorrichtung (300) ein bewegliches Fahrgestell (301) umfasst, wobei der mindestens eine Fräser (100) an dem Fahrgestell (301) befestigt ist und durch dieses bewegt werden kann, wobei gegebenenfalls der Fräser mittels des mehrachsigen Roboters am Fahrgestell befestigt ist, wobei das Verfahren ferner den Schritt des Bewegens des Fräsers relativ zur zu fräsenden Fußbodenoberfläche auf der Grundlage der Bewegung des Fahrgestells umfasst.

7. Verfahren nach Anspruch 6, wobei das Fahrgestell zwei oder mehr Raupenketten (303) umfasst, um auf der Fußbodenoberfläche angetrieben zu werden, wobei das Verfahren das Fräsen einer Anzahl von Bahnen (1010), die der Anzahl von Raupenketten entspricht, und das Positionieren die Fräsvorrichtung (300) mit den Raupenketten in diesen gefrästen Bahnen zum Starten des Fräsens der restlichen Fußbodenoberfläche umfasst.

8. Verfahren nach einem der vorhergehenden Ansprüche, wobei die Fräsvorrichtung (300) ein Fahrgestell (301) und ein Rotationssystem umfasst, wobei das Rotationssystem mindestens eine tragende Fläche und ein Hubsystem (309) umfasst, um die mindestens eine tragende Fläche in Kontakt mit der darunter liegenden Fußbodenoberfläche zu bringen und um das Fahrgestell weiter weg von der darunter liegenden Fußbodenoberfläche anzuheben, wobei das Rotationssystem ferner ermöglicht, dass sich das Fahrgestell um eine Achse senkrecht zu der mindestens einen tragenden Fläche dreht, wobei das Verfahren den Schritt des Anhebens des Fahrgestells (301) von der Fußbodenoberfläche weg und des Änderns der Ausrichtung des Fahrgestells durch Drehen des Fahrgestells relativ zum Hubsystem umfasst.

9. Verfahren nach einem der vorhergehenden Ansprüche, wobei die Fräsvorrichtung (300) einen Umgebungsscanner, vorzugsweise einen LiDAR, zum Scannen zumindest der zu fräsenden Fußbodenoberfläche umfasst, wobei das Verfahren den Schritt des Scannens zumindest der zu fräsenden Fußbodenoberfläche und das Auffinden von Objekten, die das Fräsen behindern, umfasst.

10. Verfahren nach Anspruch 9, wobei die Fräsvorrichtung (300) einen mehrachsigen Roboter mit einem mehrachsigen Roboterarm (203) umfasst, wobei der mindestens eine Fräser (100) an ein Ende des Roboterarms gekoppelt ist und durch Bewegen des mehrachsigen Roboterarms bewegt werden kann, wobei die Fräsvorrichtung ferner ein bewegliches Fahrgestell (301) umfasst, wobei der mindestens eine Fräser am Fahrgestell befestigt ist und von diesem bewegt werden kann, wobei gegebenenfalls der Fräser am Fahrgestell mittels des mehrachsigen Roboters befestigt ist, wobei das Verfahren ferner den Schritt des Berechnens eines Bewegungsablaufs des Fahrgestells und/oder Roboterarms umfasst, um die Fußbodenoberfläche vollständig abzufräsen und zu nivellieren.

11. Verfahren nach einem der vorhergehenden Ansprüche, wobei die Fräsvorrichtung (300) ein bewegliches Fahrgestell (301) umfasst, wobei der mindestens eine Fräser (100) an dem Fahrgestell befestigt ist und durch dieses bewegt werden kann, wobei die Fräsvorrichtung ein Element (1005), das eine Laserebene getrennt vom Fahrgestell erzeugt, und einen Laserdetektor zum Erkennen dieser Laserebene umfasst, der am Fahrgestell befestigt ist, wobei das Verfahren ferner den Schritt des Berechnens der Höhe des Fräsers auch durch Bestimmen der Höhe des Laserdetektors relativ zur Laserebene und optional des Anpassens der Höhe des Fräsers relativ zur definierten Höhe des Laserdetektors relativ zur Laserebene umfasst.

12. Verfahren nach einem der vorhergehenden Ansprüche, wobei die Fußbodenoberfläche aus aufgesprühtem Polyurethanschaum oder Mörtel hergestellt wird, der geschäumtes Polystyrol oder expandiertes Polystyrol in einer Mörtelmatrix umfasst.

13. Verfahren nach einem der vorhergehenden Ansprüche, wobei die Dicke des abzufräsenden Materials mindestens 1 mm beträgt.

14. Fußbodensystem (3000), das nach einem der vorhergehenden Ansprüche hergestellt ist, wobei das System umfasst:
• eine tragende Struktur (3001);
• optional auf dieser tragenden Struktur angebrachte Versorgungsleitungen (3002);
• eine Schicht aus geschäumtem, polymerhaltigem Material (1200), die auf die tragende Struktur und gegebenenfalls die Versorgungsleitungen aufgebracht wird, wobei die Schicht durch Fräsen auf der Oberseite, von der tragenden Struktur weg, nivelliert wird und eine Toleranz von weniger als 1,5 mm je 2 laufende Meter Fußbodenoberfläche aufweist;
*optional eine Schicht starre, flache Platte;
• eine Fußbodenheizungsschicht (3004), die mit Wärmeleitern (3041) versehen ist und von der nivellierten Seite der Schicht aus geschäumtem, polymerhaltigem Material oder gegebenenfalls von der Schicht aus starren, flachen Platten getragen wird;
• ein oberer Belag des Außenfußbodens (3005), der auf die Fußbodenheizungsschicht gelegt wird.

## Revendications

1. Procédé permettant la fabrication d'un système de sol (3000), comprenant les étapes :
• fourniture d'une structure support (3001) ;
• application éventuelle de lignes de service (3002) sur cette structure support ;
• application d'un matériau (1200) contenant un polymère expansé appliqué sur la structure support et, le cas échéant, sur les lignes de service afin d'obtenir une surface de sol ;
• nivellement de la surface de sol au moyen d'un appareil de fraisage (300) comprenant au moins une fraise (100) ;
• application éventuelle d'une couche de panneaux plats rigides (3003) sur le côté nivelé de la couche de matériau contenant un polymère expansé ;
• application d'une couche de chauffage par le sol (3004) dotée de conducteurs thermiques (3041) soutenus par le côté nivelé de la couche de matériau contenant un polymère expansé ou, le cas échéant, par la couche de panneaux plats rigides ;
• application d'un revêtement de sol externe supérieur (3005) placé sur la couche de chauffage par le sol.

2. Procédé selon la revendication 1, ladite application d'une couche de matériau (1200) contenant un polymère expansé comprenant la pulvérisation de la couche de matériau contenant un polymère expansé, de préférence une mousse de polyuréthane expansée.

3. Procédé selon l'une des revendications précédentes, ladite au moins une fraise (100) étant une fraise à surfacer.

4. Procédé selon l'une des revendications précédentes, ledit dispositif de fraisage (300) comprenant un système d'aspiration pour évacuer le matériau enlevé par fraisage, le procédé comprenant en outre l'évacuation du matériau enlevé par fraisage par l'intermédiaire du système d'aspiration.

5. Procédé selon l'une des revendications précédentes, ledit appareil de fraisage (300) comprenant un robot multi-axes muni d'un bras de robot multi-axes (203), ladite au moins une fraise (100) étant couplée à une extrémité du bras de robot et pouvant être déplacée en déplaçant le bras de robot multi-axes, ledit procédé comprenant en outre l'étape de déplacement de ladite au moins une fraise par rapport à la surface de sol à fraiser, en fonction du déplacement d'un ou plusieurs axes du bras de robot multi-axes.

6. Procédé selon l'une des revendications précédentes, ledit appareil de fraisage (300) comprenant un châssis mobile (301), ladite au moins une fraise (100) étant fixée et pouvant être déplacée par le châssis (301), le cas échéant ladite fraise étant fixée au châssis au moyen du robot multi-axes, ledit procédé comprenant en outre l'étape de déplacement de la fraise par rapport à la surface de sol à fraiser, en fonction du déplacement du châssis.

7. Procédé selon la revendication 6, ledit châssis comprenant deux chenilles ou plus (303) pour être propulsé sur la surface de sol, ledit procédé comprenant le fraisage d'un certain nombre de pistes (1010), égal au nombre de chenilles, et le positionnement de l'appareil de fraisage (300) avec les chenilles dans ces pistes fraisées pour démarrer le fraisage du reste de la surface de sol.

8. Procédé selon l'une des revendications précédentes, ledit appareil de fraisage (300) comprenant un châssis (301) et un système de rotation, ledit système de rotation comprenant au moins une surface support et un système de levage (309) afin d'amener ladite au moins une surface support en contact avec la surface de sol sous-jacente et pour soulever le châssis à plus grande distance de la surface de sol sous-jacente, ledit système de rotation permettant en outre au châssis de tourner autour d'un axe perpendiculaire à ladite au moins une surface support, ledit procédé comprenant l'étape de surélévation du châssis (301) à distance de la surface de sol et de modification de l'orientation du châssis en faisant tourner le châssis par rapport au système de levage.

9. Procédé selon l'une des revendications précédentes, ledit appareil de fraisage (300) comprenant un scanner d'environnement, de préférence un LiDAR, pour balayer au moins la surface de sol à fraiser, ledit procédé comprenant l'étape de balayage d'au moins la surface de sol à fraiser et de localisation des objets qui gênent le fraisage.

10. Procédé selon la revendication 9, ledit appareil de fraisage (300) comprenant un robot multi-axes muni d'un bras de robot multi-axes (203), ladite au moins une fraise (100) étant couplée à une extrémité du bras de robot et pouvant être déplacée en déplaçant le bras de robot multi-axes, ledit appareil de fraisage comprenant en outre un châssis mobile (301), ladite au moins une fraise étant fixée au châssis et pouvant être déplacée par celui-ci, le cas échéant la fraise étant fixée au châssis au moyen du robot multi-axes, ledit procédé comprenant en outre l'étape de calcul d'une séquence de déplacements du châssis et/ou du bras de robot afin de fraiser et de niveler complètement la surface de sol.

11. Procédé selon l'une des revendications précédentes, ledit appareil de fraisage (300) comprenant un châssis mobile (301), ladite au moins une fraise (100) étant fixée au châssis et pouvant être déplacée par celui-ci, ledit appareil de fraisage comprenant un élément (1005) générant un plan laser, distinct du châssis, et un détecteur laser pour détecter ce plan laser qui est fixé au châssis, ledit procédé comprenant en outre l'étape de calcul de la hauteur de la fraise en déterminant également la hauteur du détecteur laser par rapport au plan laser, et de réglage éventuel de la hauteur de la fraise par rapport à la hauteur définie du détecteur laser par rapport au plan laser.

12. Procédé selon l'une des revendications précédentes, ladite surface de sol étant fabriquée à partir de mousse de polyuréthane projetée ou de mortier qui comprend du polystyrène expansé ou du polystyrène expansé dans une matrice de mortier.

13. Procédé selon l'une des revendications précédentes, ladite épaisseur du matériau à enlever par fraisage étant d'au moins 1 mm.

14. Système de sol (3000) produit selon l'une quelconque des revendications précédentes, ledit système comprenant
• une structure support (3001) ;
• éventuellement des lignes de service (3002) appliquées sur cette structure support ;
• une couche de matériau (1200) contenant un polymère expansé appliquée sur la structure support et, le cas échéant, sur les lignes de service, ladite couche étant nivelée par fraisage sur le côté supérieur, à distance de la structure support, et comportant une tolérance inférieure à 1,5 mm pour 2 mètres linéaires de surface de sol ;
• éventuellement une couche de panneau plat rigide ;
• une couche de chauffage par le sol (3004) dotée de conducteurs thermiques (3041) soutenus par le côté nivelé de la couche de matériau contenant un polymère expansé ou, le cas échéant, par la couche de panneaux plats rigides ;
• un revêtement de sol externe supérieur (3005) placé sur la couche de chauffage par le sol.
